(19) Europäisches Patentamt
European Patent Office
Office européen des brevets

(11) **EP 4 529 035 A1**

(12) **EUROPEAN PATENT APPLICATION**
published in accordance with Art. 153(4) EPC

(43) Date of publication:
26.03.2025 Bulletin 2025/13

(21) Application number: 23815117.9

(22) Date of filing: 26.05.2023

(51) International Patent Classification (IPC):
*H04B 7/06* (2006.01)

(52) Cooperative Patent Classification (CPC):
H04B 7/0413; H04B 7/0456; H04B 7/06

(86) International application number:
PCT/CN2023/096667

(87) International publication number:
WO 2023/231934 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.06.2022 CN 202210626470

(71) Applicant: Huawei Technologies Co., Ltd.
Shenzhen, Guangdong 518129 (CN)

(72) Inventors:
• CHEN, Jiaxuan
Shenzhen, Guangdong 518129 (CN)
• HANG, Haicun
Shenzhen, Guangdong 518129 (CN)

(74) Representative: Isarpatent
Patent- und Rechtsanwälte
Barth Hassa Peckmann & Partner mbB
Friedrichstraße 31
80801 München (DE)

(54) **COMMUNICATION METHOD AND APPARATUS**

(57) A communication method and apparatus are provided. The method includes: receiving first compressed information from a terminal device, where the first compressed information is determined by the terminal device based on a first reference signal sent by an access network device using a first antenna activation mode, and the first compressed information represents first downlink channel information corresponding to an activated antenna port in the first antenna activation mode; and determining, based on the first compressed information and first information, second downlink channel information corresponding to a target antenna port, where the first information is determined based on at least one of a second reference signal or the first antenna activation mode, and the target antenna port includes an activated antenna port and an inactivated antenna port in the first antenna activation mode. In this application, the access network device recovers downlink channel information by using the antenna activation mode used when the first reference signal is sent, the received second reference signal, and the like, thereby improving recovery precision of downlink channel information.

FIG. 8

## Description

## CROSS-REFERENCE TO RELATED APPLICATIONS

This application claims priority to Chinese Patent Application No. 202210626470.3, filed with the China National Intellectual Property Administration on June 2, 2022 and entitled "COMMUNICATION METHOD AND APPARATUS", which is incorporated herein by reference in its entirety.

## TECHNICAL FIELD

Embodiments of this application relate to the field of communication technologies, and in particular, to a communication method and apparatus.

## BACKGROUND

In a wireless communication network, for example, in a mobile communication network, services supported by the network are increasingly diversified, and therefore, requirements that need to be met are increasingly diversified. For example, the network needs to be capable of supporting ultra-high rates, ultra-low latency, and/or ultra-large connections. These features make network planning, network configuration, and/or resource scheduling increasingly complex. In addition, to support an increasingly powerful network function, for example, to support new technologies such as high-order multiple-input multiple-output (multiple-input multiple-output, MIMO), beamforming, and/or beam management, a base station needs to obtain channel state information (channel state information, CSI) of a downlink channel, to recover downlink channel information based on the CSI, to implement the new technologies. How to enable the base station to recover more accurate downlink channel information is a technical problem worth studying.

## SUMMARY

This application provides a communication method and apparatus, to improve recovery precision of downlink channel information on a network side.

According to a first aspect, a communication method is provided. The method is executed by an access network device or a component (a processor, a chip, or the like) configured in an access network device. The method includes: receiving first compressed information from a terminal device, where the first compressed information is determined by the terminal device based on a first reference signal sent by the access network device using a first antenna activation mode, and the first compressed information represents first downlink channel information corresponding to an activated antenna port in the first antenna activation mode; determining, based on the first compressed information and first information, second downlink channel information corresponding to a target antenna port, where the first information is determined based on at least one of a second reference signal or the first antenna activation mode, the target antenna port includes an activated antenna port and an inactivated antenna port in the first antenna activation mode, and the second reference signal is a reference signal received by the access network device from the terminal device. The second reference signal may be referred to as an uplink reference signal and the like, and this is not limited.

In the foregoing design, an example in which the first information includes the second reference signal is used. To improve, by using uplink and downlink partial reciprocity, precision of recovering a downlink channel by a base station, or improve performance of downlink precoding, the access network device uses, by using a third model, information obtained through processing on the second reference signal that is received by the base station as an input, and outputs a parameter adjustment value of a first model. The parameter adjustment value is used for adjusting a parameter of the first model. After adjustment, the parameter of the first model includes some features shared by uplink and downlink channels, for example, correlation information between channels of different antenna ports. Therefore, the access network device may accurately recover, by using the first model, downlink channel information of all antenna ports based on only the first compressed information including channel information of a part of antenna ports.

An example in which the first information includes the first antenna activation mode is used. When activated antenna ports corresponding to channel information included in the first compressed information are different, the first model is different in operation. The first model is configured to recover downlink channel information, determine a precoding matrix, or the like. The first model may be referred to as a CSI recovery model, a decoding model, a precoding model, an AI model, or the like. This is not limited. For example, in different antenna port activation modes, activated antenna ports are different, and channel similarities between the activated antenna ports are also different. Therefore, processes of recovering all channel information by using some channel information in different activation modes are different. In an intuitive example, a process of activating the first half of the antenna ports and recovering channel information corresponding to the second half of the antenna ports is different from a process of recovering channel information of remaining antenna ports in a mode in which one antenna port in every two adjacent antenna ports is activated. Therefore, when an antenna port activation mode corresponding to the channel information included in the first compressed information is different, a corresponding parameter of the first model needs to be adjusted accordingly. Therefore, the third model may include an additional input, that is, an antenna activation mode used when the first reference signal is sent. In this application, only a part of antenna ports are activated when the first reference signal is sent, so that overheads for sending the reference signal can be effectively reduced. In addition, a reference signal received by a UE side includes only part of channel information. Therefore, the UE may perform CSI feedback by using fewer overheads, or improve precision of CSI feedback under same overheads. In addition, the parameter of the first model may be adjusted based on the antenna activation mode used when the first reference signal is sent, to compensate for a lack of channel information in the CSI feedback, and improve CSI recovery precision. Optionally, the antenna activation mode used when the first reference signal is sent is specifically an antenna activation mode used when the base station sends the first reference signal, and may also be referred to as an antenna activation mode used when the first reference signal is sent, an antenna activation mode of the first reference signal, or the like. This is not distinguished.

In a design, the determining, based on the first compressed information and first information, second downlink channel information corresponding to a target antenna port includes: determining the parameter adjustment value of the first model based on the first information; adjusting the parameter of the first model based on the parameter adjustment value of the first model; and determining, based on the first compressed information and the first model, the second downlink channel information corresponding to the target antenna port.

In a design, the method further includes: determining an adjustment value of the first reference signal based on the first information; and adjusting, based on the adjustment value of the first reference signal, the first reference signal sent by the access network device.

According to the foregoing design, for example, the access network device may use the first information as an input and input the first information into a fourth model, and an output of the fourth model may be the adjustment value of the first reference signal, or the adjustment value of the first reference signal may be determined based on an output of the fourth model. The first reference signal sent to the UE is adjusted based on the adjustment value, so that the UE can better represent downlink channel information by receiving limited reference signals, thereby improving performance of CSI compression and CSI recovery.

In a design, the method further includes: sending indication information of the first antenna activation mode to the terminal device.

According to a second aspect, a communication method is provided. The method is performed by a terminal device or a component (a processor, a chip, or another component) configured in a terminal device. The method includes: receiving a first reference signal from an access network device; determining first compressed information based on the first reference signal and a first antenna activation mode, where the first compressed information represents first downlink channel information corresponding to an activated antenna port in the first antenna activation mode; and sending the first compressed information to the access network device.

For example, the determining first compressed information based on the first reference signal includes: determining a parameter adjustment value of a second model based on the first antenna activation mode; adjusting a parameter of the second model based on the parameter adjustment value of the second model; and determining the first compressed information based on the second model and the first reference signal. Optionally, the second model is configured to compress downlink channel information determined by a UE through estimation, and the second model may also be referred to as a CSI compression model or the like.

According to the foregoing design, for example, a terminal may use the first antenna activation mode as an input and input the first antenna activation mode into a fifth model. An output of the fifth model is the parameter adjustment value of the second model. The fifth model may also be referred to as a CSI compression model adjustment network. The parameter of the second model is adjusted based on the parameter adjustment value of the second model. For example, the parameter adjustment value of the second model and a corresponding original parameter of the second model are summed, or the parameter adjustment value of the second model is multiplied by the corresponding original parameter of the second model. This is not limited. The UE determines the first compressed information based on the second model and the first reference signal. For example, the UE may use the first reference signal or information obtained through processing on the first reference signal as an input and input the first reference signal or the information to the second model. An output of the second model is the first compressed information. According to the foregoing design, in different antenna port activation modes, channel similarities of activated antenna ports are different. For different channel similarities, CSI compression may be performed by using an AI model (that is, the second model) with different parameters. In this design, an adjustment parameter of the second model is determined based on different antenna port activation modes, and the parameter of the second model is adjusted based on the adjustment parameter, so that the second model compresses channel information of the received first reference signal based on the channel similarity of the activated antenna port, thereby improving performance of CSI compression.

In a design, the method further includes: receiving indication information of the first antenna activation mode from the access network device.

According to a third aspect, an apparatus is provided and includes a unit configured to implement the method in the first aspect.

According to a fourth aspect, an apparatus is provided and includes a processor and a memory. The processor is coupled to the memory, and the processor is configured to implement the method in the first aspect.

According to a fifth aspect, an apparatus is provided and includes a unit configured to implement the method in the second aspect.

According to a sixth aspect, an apparatus is provided and includes a processor and a memory. The processor is coupled to the memory, and the processor is configured to implement the method in the second aspect.

According to a seventh aspect, a communication system is provided and includes the apparatus in the third aspect or the fourth aspect and the apparatus in the fifth aspect or the sixth aspect.

According to an eighth aspect, a computer-readable storage medium is provided and includes instructions. When the instructions are run on a computer, the computer is enabled to perform the method in the first aspect or the second aspect.

According to a ninth aspect, a chip system is provided. The chip system includes a processor and may further include a memory. The chip system is configured to implement the method in the first aspect or the second aspect. The chip system may include a chip, or may include a chip and another discrete component.

According to a tenth aspect, a computer program product is provided and includes instructions. When the instructions are run on a computer, the computer is enabled to perform the method in the first aspect or the second aspect.

**BRIEF DESCRIPTION OF DRAWINGS**

FIG. 1 is a diagram of a communication system according to this application;
FIG. 2 and FIG. 3 each are a diagram of a communication architecture according to this application;
FIG. 4 is a diagram of an architecture of an AI model according to this application;
FIG. 5 and FIG. 6 each are a diagram of a neuron according to this application;
FIG. 7 is a diagram of AI encoding and decoding according to this application;
FIG. 8 is a flowchart of a communication method according to this application;
FIG. 9 is a diagram of an antenna activation mode according to this application;
FIG. 10, FIG. 11, and FIG. 12 each are a diagram of introducing uplink channel estimation and an antenna activation mode according to this application; and
FIG. 13 and FIG. 14 each are a diagram of a communication apparatus according to this application.

**DESCRIPTION OF EMBODIMENTS**

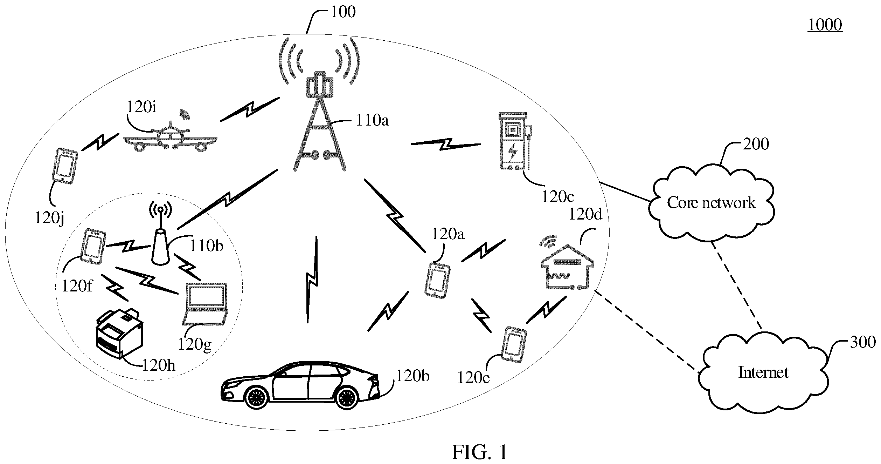

FIG. 1 is a diagram of an architecture of a communication system 1000 to which this application is applicable. As shown in FIG. 1, the communication system includes a radio access network 100 and a core network 200. Optionally, the communication system 1000 may further include an internet 300. The radio access network 100 may include at least one access network device (for example, 110a and 110b in FIG. 1), and may further include at least one terminal device (for example, 120a to 120j in FIG. 1). The terminal device is connected to the access network device in a wireless manner, and the access network device is connected to the core network in a wireless or wired manner. A core network device and the access network device may be different physical devices that are independent of each other, or functions of a core network device and logical functions of the access network device may be integrated into a same physical device, or a part of functions of a core network device and a part of functions of the access network device may be integrated into one physical device. Terminal devices may be connected to each other in a wired or wireless manner, and access network devices may be connected to each other in a wired or wireless manner. FIG. 1 is merely a diagram. The communication system may further include another network device, for example, may further include a wireless relay device, a wireless backhaul device, and the like, which are not shown in FIG. 1.

The access network device may be a base station (base station), an evolved NodeB (evolved NodeB, eNodeB), a transmission reception point (transmission reception point, TRP), a next generation base station (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or a unit, for example, may be a central unit (central unit, CU), a distributed unit (distributed unit, DU), a central unit control plane (CU control plane, CU-CP) module, or a central unit user plane (CU user plane, CU-UP) module, that completes a part of functions of a base station. The access network device may be a macro base station (for example, 110a in FIG. 1), or may be a micro base station or an indoor base station (for example, 110b in FIG. 1), or may be a relay node, a donor node, or the like. A specific technology and a specific device form that are used by the access network device are not limited in this application.

In this application, an apparatus configured to implement functions of the access network device may be an access network device; or may be an apparatus, for example, a chip system, a hardware circuit, a software module, or a combination of a hardware circuit and a software module, that can support the access network device in implementing the functions. The apparatus may be installed in the access network device or may be matched with the access network device for usage. In this application, the chip system may include a chip, or may include a chip and another discrete component. For ease of descriptions, the following describes the technical solutions provided in this application by using an example in which an apparatus configured to implement functions of the access network device is an access network device and the access network device is a base station.

(1) Protocol layer structure

Communication between an access network device and a terminal device complies with a protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal device may further include an artificial intelligence (artificial intelligence, AI) layer used to transmit data related to an AI function.

(2) Central unit (central unit, CU) and distributed unit (distributed unit, DU)

An access device may include a CU and a DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. A specific name of each interface is not limited in this application. The CU and the DU may be divided based on protocol layers of a wireless network. For example, functions of a PDCP layer and a protocol layer above the PDCP layer are set on the CU, and functions of protocol layers (for example, an RLC layer and a MAC layer) below the PDCP layer are set on the DU. For another example, functions of a protocol layer above a PDCP layer are set on the CU, and functions of the PDCP layer and protocol layers below the PDCP layer are set on the DU. This is not limited.

The division into processing functions of the CU and the DU based on protocol layers is merely an example, and the processing functions of the CU and the DU may alternatively be divided in another division manner. For example, the CU or the DU may be divided to have functions of more protocol layers. For another example, the CU or the DU may alternatively be further divided to have some processing functions of protocol layers. In a design, some functions of the RLC layer and functions of a protocol layer above the RLC layer are set on the CU, and remaining functions of the RLC layer and functions of a protocol layer below the RLC layer are set on the DU. In another design, division of functions of the CU or the DU may alternatively be performed based on service types or other system requirements, for example, based on a latency. Functions whose processing time needs to satisfy a latency requirement are set on the DU, and functions whose processing time does not need to satisfy the latency requirement are set on the CU. In another design, the CU may alternatively have one or more functions of a core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be distinguished at a physical layer (physical layer, PHY). For example, the DU may implement higher-layer functions of the PHY layer, and the RU may implement lower-layer functions of the PHY layer. When sending is performed, functions of the PHY layer may include at least one of the following: cyclic redundancy check (cyclic redundancy check, CRC) code addition, channel coding, rate matching, scrambling, modulation, layer mapping, precoding, resource mapping, physical antenna mapping, or a radio frequency sending function. When receiving is performed, functions of the PHY layer may include at least one of the following: CRC, channel decoding, rate dematching, descrambling, demodulation, layer demapping, channel detection, resource demapping, physical antenna demapping, or a radio frequency receiving function. A higher-layer function of the PHY layer may include some functions of the PHY layer. For example, the some functions are closer to the MAC layer. A lower-layer function of the PHY layer may include some other functions of the PHY layer. For example, the some other functions are closer to the radio frequency function. For example, the higher-layer function of the PHY layer may include CRC code addition, channel coding, rate matching, scrambling, modulation, and layer mapping, and the lower-layer function of the PHY layer may include precoding, resource mapping, physical antenna mapping, and a radio frequency sending function. Alternatively, the higher-layer function of the PHY layer may include CRC code addition, channel coding, rate matching, scrambling, modulation, layer mapping, and precoding, and the lower-layer function of the PHY layer may include resource mapping, physical antenna mapping, and a radio frequency sending function. For example, the higher-layer function of the PHY layer may include CRC, channel decoding, rate de-matching, decoding, demodulation, and layer demapping, and the lower-layer function of the PHY layer may include channel detection, resource demapping, physical antenna demapping, and a radio frequency receiving function. Alternatively, the higher-layer function of the PHY layer may include CRC, channel decoding, rate de-matching, decoding, demodulation, layer demapping, and channel detection, and the lower-layer function of the PHY layer may include resource demapping, physical antenna demapping, and a radio frequency receiving function.

For example, the functions of the CU may be implemented by one entity, or may be implemented by different entities. For example, the functions of the CU may be further divided. To be specific, a control plane and a user plane are separated and implemented by different entities: a control plane CU entity (that is, a CU-CP entity) and a user plane CU entity (that is, a CU-UP entity). The CU-CP entity and the CU-UP entity may be coupled to the DU to jointly complete functions of an access network device.

Optionally, any one of the DU, the CU, the CU-CP, the CU-UP, and the RU may be a software module, a hardware structure, or a combination of the software module and the hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of this application.

In a possible implementation, the access network device includes the CU-CP, the CU-UP, the DU, and the RU. For example, this application is executed by the DU, or the DU and the RU, or the CU-CP, the DU, and the RU, or the CU-UP, the DU, and the RU. This is not limited. Methods performed by the modules also fall within the protection scope of this application.

The terminal device may also be referred to as a terminal, a user equipment (user equipment, UE), a mobile station, a mobile terminal device, or the like. The terminal device may be widely used in communication in various scenarios, for example, including but not limited to at least one of the following scenarios: device-to-device (device-to-device, D2D), vehicle-to-everything (vehicle-to-everything, V2X), machine-type communication (machine-type communication, MTC), internet of things (internet of things, IOT), virtual reality, augmented reality, industrial control, self-driving, telemedicine, a smart grid, smart furniture, smart office, smart wearable, smart transportation, a smart city, or the like. The terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in this application.

In this application, an apparatus configured to implement functions of the terminal device may be a terminal device; or may be an apparatus, for example, a chip system, a hardware circuit, a software module, or a combination of a hardware circuit and a software module, that can support the terminal device in implementing the functions. The apparatus may be installed in the terminal device or may be matched with the terminal device for use. For ease of descriptions, the following describes the technical solutions provided in this application by using an example in which an apparatus configured to implement functions of the terminal device is a terminal device, and the terminal device is a UE.

The base station and the UE may be fixed or movable. The base station and/or the UE may be deployed on land, including an indoor or outdoor scenario, and a handheld or vehicle-mounted scenario; or may be deployed on a water surface; or may be deployed on an airplane, a balloon, and an artificial satellite in the air. Application scenarios of the base station and the UE are not limited in this application. The base station and the UE may be deployed in a same scenario or different scenarios. For example, the base station and the UE are both deployed on the land. Alternatively, the base station is deployed on the land, and the UE is deployed on the water surface. Examples are not described one by one.

Roles of the base station and the UE may be relative. For example, a helicopter or an unmanned aerial vehicle 120i in FIG. 1 may be configured as a mobile base station, and for a UE 120j accessing the radio access network 100 over 120i, a UE 120i is a base station. However, for a base station 110a, 120i is a UE, to be specific, communication between 110a and 120i is performed according to a radio air interface protocol. 110a and 120i may alternatively communicate with each other according to an interface protocol between base stations. In this case, relative to 110a, 120i is also a base station. Therefore, the base station and the UE may be collectively referred to as communication apparatuses, 110a and 110b in FIG. 1 each may be referred to as a communication apparatus having a base station function, and 120a to 120j in FIG. 1 each may be referred to as a communication apparatus having a UE function.

In this application, an independent network element (for example, referred to as an AI network element or an AI node) may be introduced into the communication system shown in FIG. 1 to implement an AI-related operation. The AI network element may be directly connected to the access network device in the communication system, or may be indirectly connected to the access network device via a third-party network element. The third-party network element may be a core network element such as an authentication management function (authentication management function, AMF) or a user plane function (user plane function, UPF). Alternatively, an AI function, an AI module, or an AI entity may be configured in another network element in the communication system to implement the AI-related operation. For example, the another network element may be an access network device (such as a gNB), a core network device, or a network management (operations, administration, and maintenance, OAM). In this case, a network element that performs the AI-related operation is a network element with a built-in AI function. The OAM is configured to perform operations, administration, maintenance, and the like on the access network device and/or the core network device.

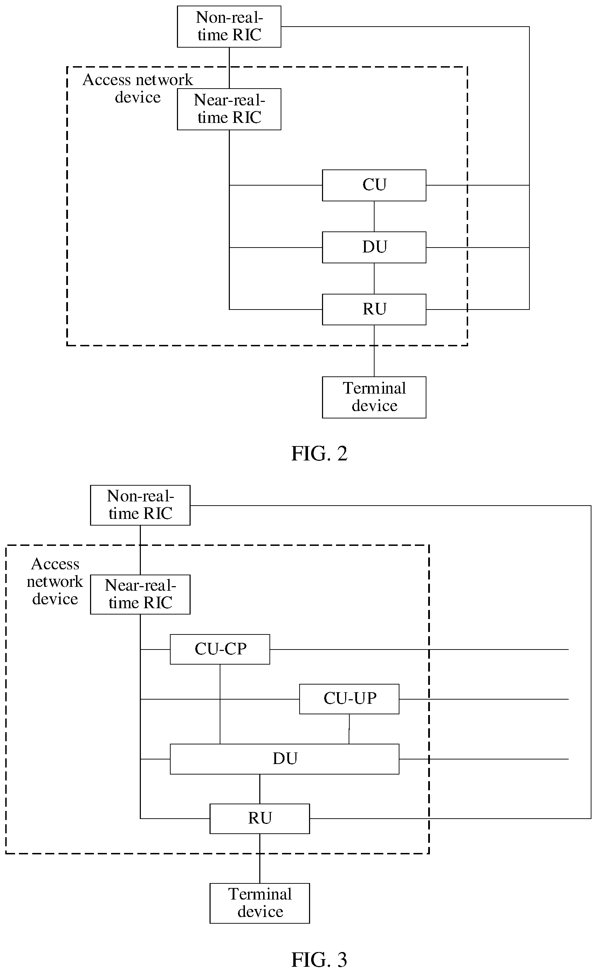

Optionally, FIG. 2 shows an architecture of a communication system according to this application. As shown in FIG. 2, in a first design, an access network device internally includes a near-real-time radio access network intelligent controller (RAN intelligent controller, RIC) module for model training and inference. For example, the near-real-time RIC may be used for training an AI model, and using the AI model for inference. For example, the near-real-time RIC may obtain information about a network side and/or a terminal side from at least one of a CU, a DU, or an RU, and the information may be used as training data or inference data. Optionally, the near-real-time RIC may submit an inference result to at least one of the CU, the DU, the RU, or a terminal device. Optionally, the CU and the DU may exchange the inference result. Optionally, the DU and the RU may exchange the inference result. For example, the near-real-time RIC submits the inference result to the DU, and the DU forwards the inference result to the RU.

Alternatively, in a second design, as shown in FIG. 2, a non-real-time RIC is located outside an access network device (optionally, the non-real-time RIC may be located in OAM or a core network device), and the non-real-time RIC is used for model training and inference. For example, the non-real-time RIC is used for training an AI model and using the model for inference. For example, the non-real-time RIC may obtain information about a network side and/or a terminal side from at least one of a CU, a DU, or an RU, and the information may be used as training data or inference data. An inference result may be submitted to at least one of the CU, the DU, the RU, or a terminal device. Optionally, the CU and the DU may exchange the inference result. Optionally, the DU and the RU may exchange the inference result. For example, the non-real-time RIC submits the inference result to the DU, and the DU forwards the inference result to the RU.

Alternatively, in a third design, as shown in FIG. 2, an access network device includes a near-real-time RIC, and a non-real-time RIC is located outside the access network device (optionally, the non-real-time RIC may be located in OAM or a core network device). Similar to the second design, the non-real-time RIC may be used for model training and inference; and/or, similar to the first design, the near-real-time RIC may be used for model training and inference; and/or, the non-real-time RIC performs model training, and the near-real-time RIC may obtain AI model information from the non-real-time RIC, obtain information about a network side and/or a terminal side from at least one of a CU, a DU, or an RU, and obtain an inference result based on the information and the AI model information. Optionally, the near-real-time RIC may submit an inference result to at least one of the CU, the DU, the RU, or a terminal device. Optionally, the CU and the DU may exchange the inference result. Optionally, the DU and the RU may exchange the inference result. For example, the near-real-time RIC submits the inference result to the DU, and the DU forwards the inference result to the RU. For example, the near-real-time RIC is used for training a model A, and using the model A for inference. For example, the non-real-time RIC is used for training a model B, and using the model B for inference. For example, the non-real-time RIC is used for training a model C and sending information about the model C to the near-real-time RIC, and the near-real-time RIC uses the model C for inference.

FIG. 3 shows an architecture of another communication system according to this application. Compared with FIG. 2, in FIG. 3, a CU is separated into a CU-CP, a CU-UP, and the like.

An AI model is a specific implementation of an AI function, and the AI model represents a mapping relationship between an input and an output of the model. The AI model may be a neural network, a linear regression model, a decision tree model, a support vector machine (support vector machine, SVM), a Bayesian network, a Q learning model, another machine learning model, or the like. In this application, the AI function may include at least one of the following: data collection (collection of training data and/or inference data), data preprocessing, model training (or referred to as model learning), model information release (configuration of model information), model verification, model inference, or inference result release. Inference may also be referred to as prediction. In this application, the AI model may be referred to as a model for short.

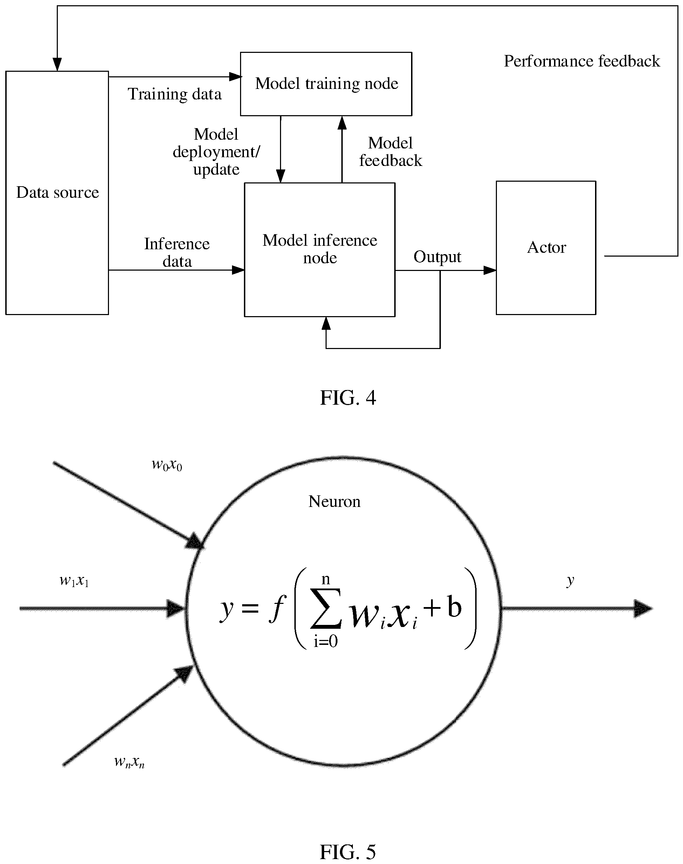

FIG. 4 is a diagram of an application architecture of an AI model. A data source (data source) is configured to store training data and inference data. A model training node (model training host) analyzes or trains training data (training data) provided by the data source to obtain an AI model, and deploys the AI model in a model inference node (model inference host). Optionally, the model training node may further update the AI model that has been deployed on the model inference node. The model inference node may further feed back related information of the deployed model to the model training node, so that the model training node optimizes or updates the deployed AI model, and so on.

That the AI model is obtained through learning by using the model training node is equivalent to that the model training node obtains a mapping relationship between an input and an output of the model through learning based on training data. The model inference node uses the AI model to perform inference based on inference data provided by the data source, to obtain an inference result. The method may also be described as follows: The model inference node inputs inference data to the AI model, and obtains an output via the AI model. The output is an inference result. The inference result may indicate a configuration parameter used (executed) by an executor, and/or an operation performed by an executor. The inference result may be centrally planned by an actor (actor) entity, and sent to one or more executors (for example, network entities) for action. Optionally, the actor entity or the executor may feed back a parameter or a measurement amount collected by the actor entity or the executor to the data source. This process may be referred to as performance feedback, and the fed-back parameter may be used as training data or inference data. Optionally, feedback information related to model performance may also be determined based on the inference result output by the model inference node, and the feedback information is fed back to the model inference node. The model inference node may feed back performance information and the like of the model to the model training node based on the feedback information, so that the model training node optimizes or updates the deployed AI model, and so on. This process may be referred to as model feedback.

The AI model may be a neural network or another machine learning model. The neural network is used as an example. The neural network is a specific implementation form of a machine learning technology. According to a universal approximation theorem, the neural network can theoretically approximate to any continuous function, so that the neural network has a capability of learning any mapping. Therefore, the neural network can accurately perform abstract modeling for a complex high-dimension problem.

The idea of the neural network comes from a neuron structure of brain tissue. Each neuron performs a weighted summation operation on input values of the neuron, and outputs a result of the weighted summation through an activation function. FIG. 5 is a diagram of a structure of a neuron. It is assumed that inputs of the neuron are $x = [x_0, x_1, \ldots , x_n]$, weights corresponding to the inputs are $w = [w, w_1, \ldots , w_n]$ respectively, and an offset of weighted summation is b. Forms of the activation function may be diversified. It is assumed that an activation function of a neuron is $y = f(z) = max(0, z)$, and an output of the neuron is

$$y = f\left(\sum_{i=0}^{i=n} w_i * x_i + b\right) =$$

$$max\left(0, \sum_{i=0}^{i=n} w_i * x_i + b\right)$$ . For another example, an activation function of a neuron is $y = f(z) = z$, and an output of the neuron is

$$y = f\left(\sum_{i=0}^{i=n} w_i * x_i + b\right) = \sum_{i=0}^{i=n} w_i * x_i + b$$

. $x_i$, $w_i$, and b may be various possible values such as a decimal, an integer (including 0, a positive integer, a negative integer, or the like), or a complex number. Activation functions of different neurons in the neural network may be the same or different.

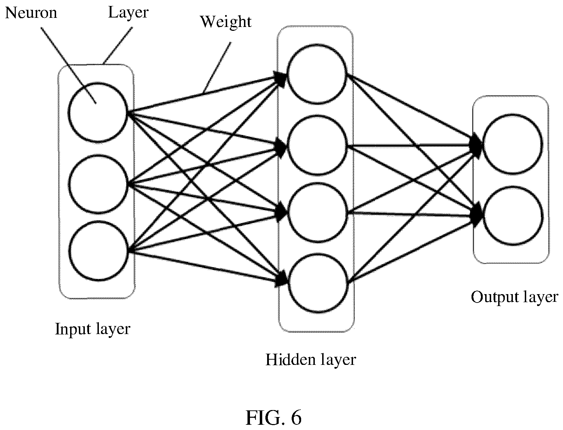

The neural network generally includes a multi-layer structure, and each layer may include one or more neurons. Increasing a depth and/or a width of the neural network can improve an expression capability of the neural network, and provide more powerful information extraction and abstract modeling capabilities for complex systems. The depth of the neural network may refer to a quantity of layers included in the neural network, and a quantity of neurons included in each layer may be referred to as a width of the layer. FIG. 6 is a diagram of a layer relationship of a neural network. In an implementation, the neural network includes an input layer and an output layer. After performing neuron processing on a received input, the input layer of the neural network transfers a result to the output layer, and the output layer obtains an output result of the neural network. In another implementation, the neural network includes an input layer, a hidden layer, and an output layer. After performing neuron processing on a received input, the input layer of the neural network transfers a result to an intermediate hidden layer, then the hidden layer transfers a calculation result to the output layer or an adjacent hidden layer, and finally, the output layer obtains an output result of the neural network. One neural network may include one hidden layer or a plurality of hidden layers that are connected in sequence. This is not limited. In a training process of the neural network, a loss function may be defined. The loss function describes a gap or difference between an output value of the neural network and an ideal target value of the neural network. A specific form of the loss function is not limited in this application. A training process of the neural network is a process of adjusting a parameter of the neural network, such as a quantity of layers of the neural network, a width of the neural network, a weight of a neuron, and/or a parameter in an activation function of the neuron, so that a value of the loss function is less than a threshold or meets a target requirement.

With the development of wireless communication technologies, supported services continuously increase, and higher requirements are imposed on a communication system in terms of indicators such as a system capacity and a communication latency. In a massive multiple-input multiple-output (multiple-input multiple-output, MIMO) system, a large-scale antenna array is configured at a receive end and a transmit end, so that a diversity gain in space domain can be achieved, thereby significantly increasing a system capacity. For example, a base station may simultaneously send data to a plurality of UEs by using a same time-frequency resource, that is, multi-user MIMO (multi-user MIMO, MU-MIMO), or simultaneously send a plurality of data streams to a same UE, that is, single-user MIMO (single-user MIMO, SU-MIMO). Spatial multiplexing is performed between data of the plurality of UEs or between the plurality of data streams of the same UE. Therefore, this becomes a key direction in evolution of the communication system.

In the massive MIMO system, the base station needs to precode, by using a precoding matrix, downlink data sent by a UE. The base station may implement spatial multiplexing (spatial multiplexing) between users or between different data streams of a same user by using a precoding technology, so that data of different UEs or data of different data streams of a same UE is spatially isolated, thereby reducing interference between different UEs or between different data streams of a same UE, and improving a signal to interference plus noise ratio received by a UE end. To calculate the precoding matrix, the base station needs to obtain channel state information (channel state information, CSI) of a downlink channel, and determine the precoding matrix based on the CSI. However, in a currently widely used communication system based on frequency division duplex (frequency division duplex, FDD), uplink and downlink channels do not have reciprocity, and the base station needs to obtain downlink CSI through feedback of a UE. For example, the base station sends a downlink reference signal to the UE, and the UE receives the downlink reference signal. Because the UE knows a sending sequence of the downlink reference signal, the UE may estimate or measure, based on the received downlink reference signal, a downlink channel through which the downlink reference signal passes. Then, the UE generates CSI based on a downlink channel obtained through measurement, and feeds back the CSI to the base station.

In an FDD system, an important part of CSI feedback is a precoding matrix indicator (precoding matrix indicator, PMI). In the CSI, bits 0 and 1 may be used to quantize a channel matrix or a precoding matrix. A design of the PMI, also referred to as a codebook design, is a basic issue in a mobile communication system. In a conventional codebook design method, a series of precoding matrices and corresponding numbers are predefined or agreed on in a protocol, and these precoding matrices are referred to as codewords. A channel matrix or a precoding matrix may be approximated by using a predefined codeword or a linear combination of a plurality of predefined codewords. Therefore, the UE may feed back, to the base station by using the PMI, a number corresponding to the codeword, a weighting coefficient, and the like, so that the base station recovers the channel matrix or the precoding matrix.

As a scale of an antenna array in the MIMO system continuously increases, a quantity of antenna ports that can be supported increases, and dimensions of a corresponding channel matrix or precoding matrix also increase. To enable the UE to estimate or measure the downlink channel, overheads of delivering a reference signal by the base station increase. In addition, an error of approximately representing a large-scale channel matrix and precoding matrix by using a limited predefined codeword increases. A method for improving channel recovery precision is to increase a quantity of codewords in a codebook. However, this increases overheads of CSI feedback (where the CSI feedback includes one or more of a number corresponding to a codeword and a weighting coefficient), resulting in reducing available resources for data transmission and causing a system capacity loss. In conclusion, how to compress and represent channel information more effectively and how to recover the channel information more effectively based on feedback information without increasing overheads of delivering a reference signal and overheads of CSI feedback needs to be studied.

A correlation exists between different elements in a downlink channel matrix between the base station and the UE. In addition, a correlation also exists between downlink channel matrices in different slots. For example, that the correlation exists between different elements in the channel matrix means that there is a group of substrates (which may be represented by a matrix $U_1$ and a matrix $U_2$). When a channel matrix H is projected to the group of substrates, a sparse equivalent channel may be obtained, to be specific, $H'=U_1^H H U_2$ is a sparse matrix, where the superscript H represents a conjugate transpose operation. Theoretically, the channel matrix H can be recovered only by estimating and feeding back a non-zero element in H' by delivering a reference signal. Therefore, the overheads of delivering the reference signal and the overheads of the CSI feedback have compression space. However, in a conventional CSI feedback solution, such as the foregoing codebook-based feedback manner, channel compression space is not fully used, and a channel compression process may cause a large information loss. A machine learning method, such as deep learning (deep learning, DL), has a higher capability of extracting a nonlinear feature. Therefore, a correlation between channel matrices can be extracted more effectively. In this way, in comparison with the conventional solution, channel information can be compressed and represented more effectively, and a channel can be recovered more effectively based on feedback information.

An AI-based CSI feedback solution includes: The UE receives a reference signal from the base station; and optionally, estimates downlink channel information based on the reference signal. The reference signal or the downlink channel information obtained through estimation is used as an input of an encoder, and an output of the encoder is compressed channel information, and the compressed channel information is fed back to the base station. The base station inputs the compressed channel information to a decoder, and recovers the corresponding downlink channel information. The encoder and the decoder may be AI models of a type such as a convolutional neural network (convolutional neural network, CNN) or a transform neural network Transformer. Optionally, the input of the encoder and an output of the decoder may correspond to downlink channel information of a same slot, and the downlink channel information may include channel information of one or more subbands between the UE and the base station.

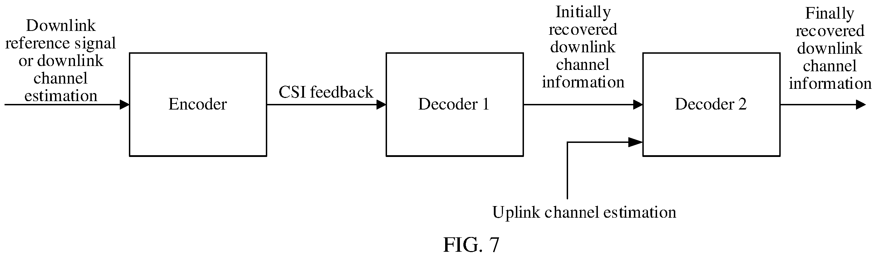

In another solution, although uplink and downlink channels in the FDD system do not meet strict uplink and downlink reciprocity, an experiment shows that the uplink and downlink channels have a high similarity in an angle domain, including an angle of arrival (angle of arrival, AoA), an angle of departure (angle of departure, AoD), and the like, a latency domain, and the like. Therefore, recovery precision of the downlink channel may be improved by using uplink channel information. As shown in FIG. 7, the UE inputs the received reference signal or the downlink channel information determined based on the reference signal to the encoder, and the output of the encoder is compressed channel information. The compressed channel information may be referred to as CSI. The base station uses the received compressed channel information as an input of a first-layer decoder, and an output of the first-layer decoder is initially recovered downlink channel information. The initially recovered downlink channel information and estimated uplink channel information are used as inputs of a second-layer decoder, so that finally recovered downlink channel information is obtained. The first-layer decoder may be referred to as a decoder 1, and the second-layer decoder may be referred to as a decoder 2.

In the foregoing two solutions, the base station sends reference signals through all antenna ports, and the UE feeds back compressed channel information of a corresponding antenna port to the base station, that is, the UE feeds back CSI feedback of all antenna ports to the base station. However, as the scale of the antenna array in the MIMO system continuously increases, a quantity of antenna ports that can be supported by the base station increases, and overheads for sending a reference signal by the base station and overheads for feeding back CSI by the UE inevitably increase accordingly. This application provides a communication method. In the method, the base station sends the reference signal through some activated antenna ports, and the UE feeds back compressed channel information corresponding to the part of antenna ports. The base station recovers channel information of all antenna ports based on the compressed channel information of the part of antenna ports fed back by the UE, to reduce transmission overheads of the reference signal and the compressed channel information, and increase a system capacity.

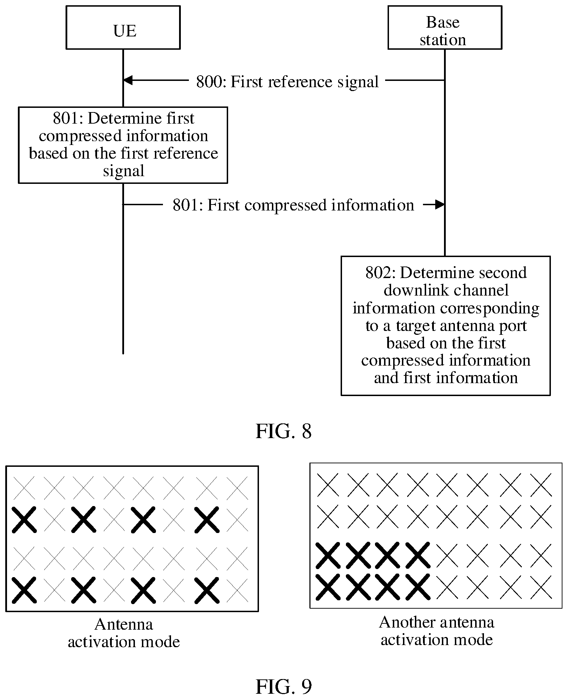

As shown in FIG. 8, a procedure of a communication method is provided and includes at least the following steps.

Step 800: A UE receives a first reference signal from a base station.

Optionally, the first reference signal may be referred to as a downlink reference signal, or the first reference signal may also be referred to as a CSI-reference signal (reference signal, RS). To reduce overheads of sending the first reference signal by the base station and overheads of feeding back compressed information by the UE, the base station may activate only a part of antenna ports when sending the first reference signal. Optionally, the base station may support N antenna activation modes, and the antenna activation modes may correspond to different activated antenna ports. FIG. 9 shows an example of two antenna activation modes. In FIG. 9, a bold "×" represents an activated antenna port, and a non-bold "×" represents an inactivated antenna port. In the descriptions of this application, the antenna port may also be referred to as a port. The base station may select a first antenna activation mode from the plurality of supported antenna activation modes. A rule for selecting the first antenna activation mode by the base station is not limited. For example, the base station may select the first antenna activation mode based on performance improvement, may select the first antenna activation mode due to a limitation of a physical condition, or the like. This is not limited.

Optionally, the antenna activation mode may be represented by using an integer vector with a length of Nt, where Nt represents a total quantity of antenna ports in the base station. In Nt, if an $i^{th}$ element is 0, it indicates that an $i^{th}$ port is not activated; or if an $i^{th}$ element is 1, it indicates that an $i^{th}$ antenna port is activated, where i is an integer greater than or equal to 1 and less than or equal to Nt. Alternatively, the antenna activation mode may be represented by using an integer vector with a length of K, where K represents an activated antenna port, and K is an integer less than or equal to Nt. Each element corresponds to a subscript of one activated antenna port. For example, for 32 antenna ports, if the $1^{st}$, $2^{nd}$, $16^{th}$, and $17^{th}$ antenna ports are activated, the antenna activation mode may be represented by a vector (1, 2, 16, 17) whose length is 4.

Step 801: The UE determines first compressed information based on the first reference signal, where the first compressed information represents first downlink channel information corresponding to an activated antenna port in the first antenna activation mode, and sends the first compressed information to the base station. Accordingly, the base station receives the first compressed information from the UE, where the first compressed information is determined by the UE based on the first reference signal sent by the base station using the first antenna activation mode, and the first compressed information represents the first downlink channel information corresponding to the activated antenna port in the first antenna activation mode.

Optionally, when receiving the first reference signal, the UE may determine compressed information of a downlink channel based on the first reference signal. The compressed information of the downlink channel is the first compressed information in step 801. In other words, the first compressed information in step 801 may also be referred to as the compressed information of the downlink channel, or referred to as CSI feedback of the UE, and this is not limited. It may be understood that, because the base station sends the first reference signal by using the activated antenna port in the first antenna activation mode, the first compressed information determined by the UE based on the first reference signal is downlink channel information corresponding to the activated antenna port in the first antenna activation mode, and is referred to as the first downlink channel information in step 801. For example, an example in which the first compressed information is determined in an AI manner is used. In an implementation, the UE preprocesses the received first reference signal and then inputs preprocessed first reference signal into a second model, to obtain the first compressed information. A manner in which the UE preprocesses the received first reference signal may be as follows: The UE does not process the first reference signal and directly inputs the first reference signal to the second model, or the UE performs channel estimation based on the received first reference signal, and inputs channel information H obtained through estimation into the second model. Optionally, dimensions of the channel information H obtained through estimation include a complex matrix whose dimensions are (Nt, Nr). Nt represents a quantity of transmit antenna ports, that is, the quantity of antenna ports on the base station side. Nr represents a quantity of receive antenna ports, that is, the quantity of antenna ports on the UE side. Further, channel information of a plurality of subbands may be combined. To be specific, the channel information obtained through estimation may be a three-dimensional tensor whose dimensions are (Nt, Nr, Nsub), where Nsub represents a quantity of subbands. Optionally, the UE may further perform another preprocessing operation on the first reference signal or the corresponding channel information H. This is not limited.

Step 802: The base station determines, based on the first compressed information and first information, second downlink channel information corresponding to a target antenna port, where the first information is determined based on at least one of a second reference signal or the first antenna activation mode, and the target antenna port includes an activated antenna port and an inactivated antenna port in the first antenna activation mode.

Optionally, the UE may further send the second reference signal to the base station, and the second reference signal may also be an uplink reference signal. Optionally, the second reference signal may be predefined, or indicated by the base station to the UE, or selected by the UE. This is not limited. The base station may determine the first information based on at least one of the second reference signal or the first antenna activation mode. In an implementation, the first information includes the second reference signal; or in another implementation, the first information includes the first antenna activation mode; or in another implementation, the first information includes the second reference signal and the first antenna activation mode; or in another implementation, the first information includes information obtained through corresponding processing on the second reference signal; or in another implementation, the first information includes information obtained through joint processing on the second reference signal and the first antenna activation mode. A manner of processing the second reference signal is that the base station performs uplink channel estimation based on the second reference signal and uses a determined uplink channel estimation result as information obtained through processing on the second reference signal. For another example, a manner of performing joint processing on the second reference signal and the first antenna activation mode is concatenating the second reference signal and the first antenna activation mode. For another example, a manner of performing joint processing on the second reference signal and the first antenna activation mode is concatenating the first antenna activation mode and the uplink channel estimation result obtained based on the second reference signal.

In this application, the base station may determine a parameter adjustment value of a first model based on the first information; adjust a parameter of the first model based on the parameter adjustment value of the first model; and determine, based on the first compressed information and the first model, the second downlink channel information corresponding to the target antenna port.

For example, a third model may be deployed in the base station, and the third model may be referred to as an AI model, a downlink model adjustment network, or the like. The first information is used as an input of the third model, and an output of the third model is the parameter adjustment value of the first model. Alternatively, the parameter adjustment value of the first model is determined based on an output of the third model; and the parameter of the first model is adjusted based on the parameter adjustment value of the first model. An example in which a neural network is used as a model. A parameter of the model may include at least one of a quantity of layers of the neural network, a width of the neural network, a weight of a neuron, an activation function of a neuron, or the like. In other words, at least one of the following parameters of the first model may be adjusted based on the parameter adjustment value of the first model: a quantity of layers of the neural network, a width of the neural network, a weight of a neuron, an activation function of a neuron, or the like. For example, the parameter adjustment value of the first model and a corresponding original parameter of the first model may be summed, or the parameter adjustment value of the first model may be multiplied by the corresponding original parameter of the first model. This is not limited. The base station uses the first compressed information, for example, CSI feedback, received from the UE as an input of the first model, and an output of the first model is recovered channel information corresponding to the target antenna port. The channel information is referred to as the second downlink channel information in step 802. Optionally, the output of the first model may alternatively be a downlink precoding matrix directly. This is not limited. The first model is configured to recover downlink channel information, determine a precoding matrix, or the like. The first model may be referred to as a CSI recovery model, a decoding model, a precoding model, an AI model, or the like. This is not limited. The target antenna port includes an activated antenna port and an inactivated antenna port in the first antenna activation mode. Alternatively, it may be described as follows: The base station may recover downlink channel information of all antenna ports based on the first information and first compressed information that is fed back by the UE and that includes channel information of a part of antenna ports, thereby reducing air interface overheads of feeding back the first compressed information by the UE.

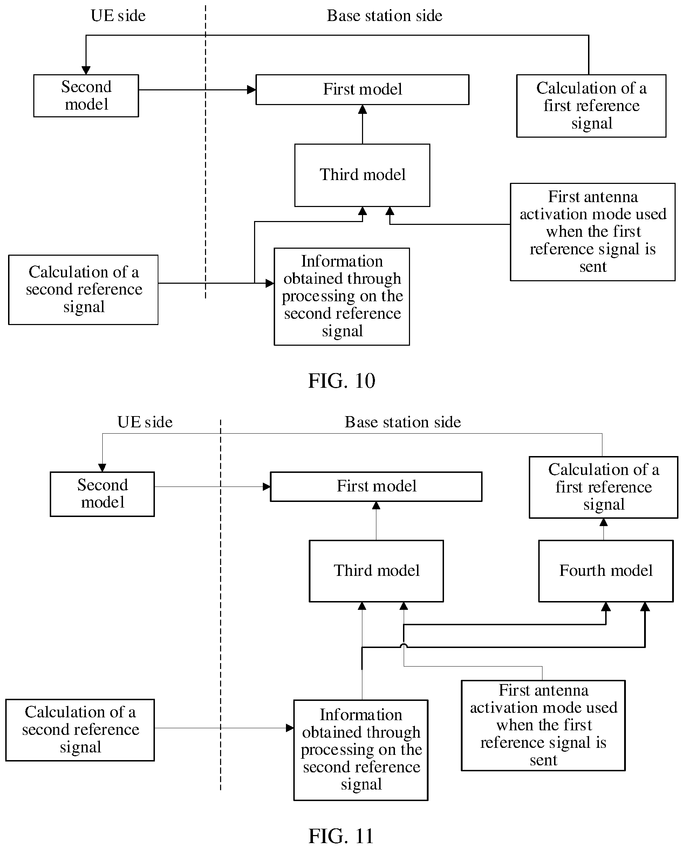

For example, as shown in FIG. 10, to improve, by using uplink and downlink partial reciprocity, precision of recovering a downlink channel by the base station, or improve performance of downlink precoding, the third model uses information obtained through processing on the second reference signal that is received by the base station as an input, and an output of the third model is the parameter adjustment value of the first model. The parameter adjustment value is used for adjusting the parameter of the first model. After adjustment, the parameter of the first model includes some features shared by uplink and downlink channels, for example, correlation information between channels of different antenna ports. Therefore, the first model may accurately recover downlink channel information of all antenna ports based on only the first compressed information including channel information of a part of antenna ports.

Further, when activated antenna ports corresponding to channel information included in the first compressed information are different, the first model has different parameter adjustment values. For example, in different antenna port activation modes, activated antenna ports are different, and channel similarities between the activated antenna ports are also different. Therefore, processes of recovering all channel information by using some channel information in different activation modes are different. In an intuitive example, a process of activating the first half of the antenna ports and recovering channel information corresponding to the second half of the antenna ports is different from a process of recovering channel information of remaining antenna ports in a mode in which one antenna port in every two adjacent antenna ports is activated. Therefore, in FIG. 10, when an antenna port activation mode corresponding to the channel information included in the first compressed information is different, a corresponding parameter of the first model needs to be adjusted accordingly. Therefore, the third model may include an additional input, that is, an antenna activation mode used when the first reference signal is sent.

In this application, only a part of antenna ports are activated when the first reference signal is sent, so that overheads for sending the reference signal can be effectively reduced. In addition, a reference signal received by the UE side includes only part of channel information. Therefore, the UE may perform CSI feedback by using fewer overheads, or improve precision of CSI feedback under same overheads. In addition, the parameter of the first model may be adjusted based on the antenna activation mode used when the first reference signal is sent, to compensate for a lack of channel information in the CSI feedback, and improve CSI recovery precision. Optionally, the antenna activation mode used when the first reference signal is sent is specifically an antenna activation mode used when the base station sends the first reference signal, and may also be referred to as an antenna activation mode used when the first reference signal is sent, an antenna activation mode of the first reference signal, or the like. This is not distinguished.

Optionally, the base station may further determine an adjustment value of the first reference signal based on the first information, and adjust, based on the adjustment value of the first reference signal, the first reference signal sent by the base station. For example, the first information may be used as an input and input to a fourth model, and an output of the fourth model may be the adjustment value of the first reference signal, or the adjustment value of the first reference signal may be determined based on an output of the fourth model. The first reference signal sent to the UE is adjusted based on the adjustment value. As shown in FIG. 11, the fourth model is added based on FIG. 10. An input of the fourth model is information obtained through processing on the second reference signal and the first antenna activation mode used when the first reference signal is sent. The output of the fourth model is the adjustment value of the first reference signal. The first reference signal sent by the base station is adjusted based on the adjustment value. For example, the adjustment value of the reference signal may be an adjustment value of a transmit power, and an original power for sending the reference signal may be adjusted based on the adjustment value of the transmit power. Alternatively, the adjustment value of the reference signal may be a modulation and coding scheme or the like of the reference signal, and an original modulation and coding scheme or the like of the reference signal may be adjusted based on the modulation and coding scheme of the reference signal. According to the foregoing method, the UE can better represent downlink channel information by receiving limited reference signals, thereby improving performance of CSI compression and CSI recovery. In one implementation of processing the second reference signal, the uplink channel estimation result is obtained based on the second reference signal, or in another implementation of processing the second reference signal, the second reference signal is directly used as the input of the fourth model.

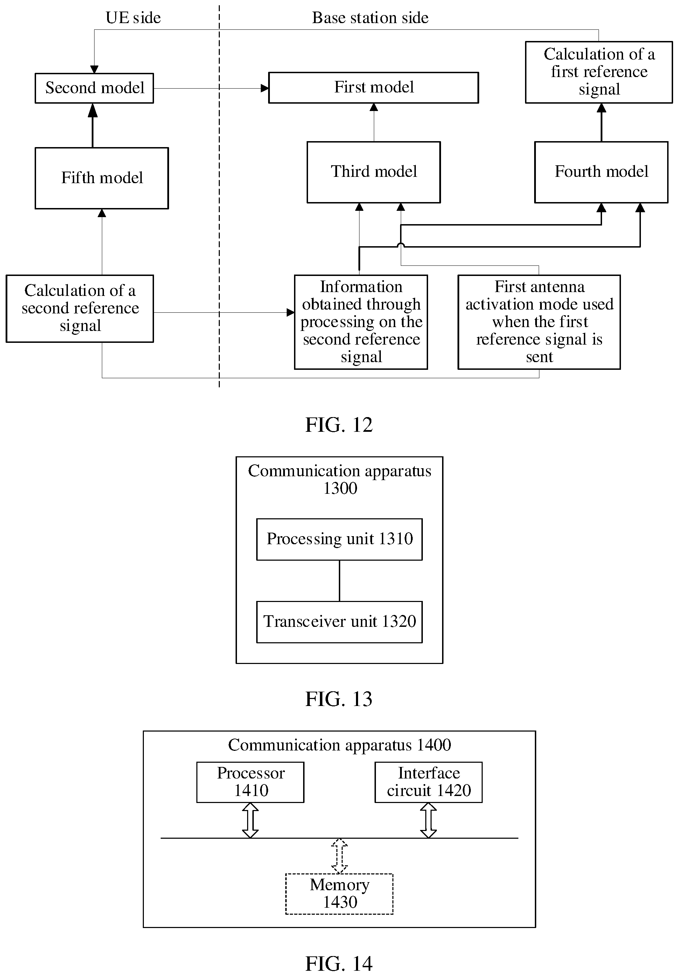

Optionally, the base station may further send indication information of the first antenna activation mode to the UE. Correspondingly, the UE receives the indication information of the first antenna activation mode from the base station. As shown in FIG. 12, the UE may adjust a parameter of the second model based on the first antenna activation mode. The second model may also be referred to as a CSI compression model. For example, the UE determines a parameter adjustment value of the second model based on the first antenna activation mode. For example, the UE may use the first antenna activation mode as an input and input the first antenna activation mode to a fifth model. An output of the fifth model is the parameter adjustment value of the second model. The fifth model may also be referred to as a CSI compression module adjustment network. For the parameter of the second model, refer to the foregoing descriptions. The parameter of the second model is adjusted based on the parameter adjustment value of the second model. For example, the parameter adjustment value of the second model and a corresponding original parameter of the second model are summed, or the parameter adjustment value of the second model is multiplied by the corresponding original parameter of the second model. This is not limited. The UE determines the first compressed information based on the second model and the first reference signal. For example, the UE may use the first reference signal or information obtained through processing on the first reference signal as an input and input the first reference signal or the information to the second model. An output of the second model is the first compressed information.

In this application, in different antenna port activation modes, channel similarities of activated antenna ports are different. For different channel similarities, CSI compression may be performed by using an AI model (that is, the second model) with different parameters. In this design, an adjustment parameter of the second model is determined based on different antenna port activation modes, and the parameter of the second model is adjusted based on the adjustment parameter, so that the second model compresses channel information of the received first reference signal based on the channel similarity of the activated antenna port, thereby improving performance of CSI compression.

It may be understood that to implement functions in the foregoing embodiments, the base station and the terminal include corresponding hardware structures and/or software modules for performing various functions. A person skilled in the art should be easily aware that, based on the units and method steps in the examples described in embodiments disclosed in this application, this application can be implemented through hardware or a combination of hardware and computer software. Whether a function is executed through hardware or hardware driven by computer software depends on particular application scenarios and design constraint conditions of the technical solutions.

FIG. 13 and FIG. 14 each are a diagram of a structure of a possible communication apparatus according to an embodiment of this application. These communication apparatuses may be configured to implement the function of the terminal or the base station in the foregoing method embodiments, and therefore can also achieve beneficial effects of the foregoing method embodiments. In this embodiment of this application, the communication apparatus may be one of the terminals 120a to 120j shown in FIG. 1, or may be the base station 110a or 110b shown in FIG. 1, or may be a module (such as a chip) used in the terminal or the base station.

As shown in FIG. 13, the communication apparatus 1300 includes a processing unit 1310 and a transceiver unit 1320. The communication apparatus 1300 is configured to implement the function of the terminal or the base station in the method embodiment shown in FIG. 8.

When the communication apparatus 1300 is configured to implement the function of the base station in the method embodiment shown in FIG. 8, the transceiver unit 1320 is configured to receive first compressed information from a terminal device, where the first compressed information is determined by the terminal device based on a first reference signal sent by an access network device using a first antenna activation mode, and the first compressed information represents first downlink channel information corresponding to an activated antenna port in the first antenna activation mode; and the processing unit 1310 is configured to determine, based on the first compressed information and first information, second downlink channel information corresponding to a target antenna port, where the first information is determined based on at least one of a second reference signal or the first antenna activation mode, and the target antenna port includes an activated antenna port and an inactivated antenna port in the first antenna activation mode.

When the communication apparatus 1300 is configured to implement the function of the terminal in the method embodiment shown in FIG. 8, the transceiver unit 1320 is configured to receive a first reference signal from an access network device; the processing unit 1310 is configured to determine first compressed information based on the first reference signal and a first antenna activation mode, where the first compressed information represents first downlink channel information corresponding to an activated antenna port in the first antenna activation mode; and the transceiver unit 1320 is further configured to send the first compressed information to the access network device.

For more detailed descriptions of the processing unit 1310 and the transceiver unit 1320, directly refer to the related descriptions in the method embodiment shown in FIG. 8. Details are not described herein.

As shown in FIG. 14, the communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a memory 1430, configured to store instructions executed by the processor 1410, store input data for the processor 1410 to run instructions, or store data generated after the processor 1410 runs instructions.

When the communication apparatus 1400 is configured to implement the method shown in FIG. 8, the processor 1410 is configured to implement the functions of the processing unit 1310, and the interface circuit 1420 is configured to implement the functions of the transceiver unit 1320.

When the communication apparatus is a chip used in a terminal, the chip in the terminal implements the functions of the terminal in the foregoing method embodiments. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

When the communication apparatus is a module used in a base station, the module in the base station implements the functions of the base station in the foregoing method embodiment. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing a software instruction by the processor. The software instruction may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a special-purpose computer, a computer network, a network device, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, a computer, a server, or a data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise specified or a logic conflict occurs, terms and/or descriptions in different embodiments are consistent and may be mutually referenced, and technical features in different embodiments may be combined to form a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects. "Including at least one of A, B, and C" may represent: including A; including B;

including C; including A and B; including A and C; including B and C; and including A, B, and C.

It may be understood that various numbers in embodiments of this application are merely used for differentiation for ease of descriptions, and are not used to limit the scope of embodiments of this application. Sequence numbers of the foregoing processes do not mean execution sequences. The execution sequences of the processes should be determined based on functions and internal logic of the processes.

## Claims

1. A communication method, comprising:

   receiving first compressed information from a terminal device, wherein the first compressed information is determined by the terminal device based on a first reference signal sent by an access network device using a first antenna activation mode, and the first compressed information represents first downlink channel information corresponding to an activated antenna port in the first antenna activation mode; and
   determining, based on the first compressed information and first information, second downlink channel information corresponding to a target antenna port, wherein the first information is determined based on at least one of a second reference signal or the first antenna activation mode, the target antenna port comprises an activated antenna port and an inactivated antenna port in the first antenna activation mode, and the second reference signal is a reference signal received by the access network device from the terminal device.

2. The method according to claim 1, wherein the determining, based on the first compressed information and first information, second downlink channel information corresponding to a target antenna port comprises:

   determining a parameter adjustment value of a first model based on the first information;
   adjusting a parameter of the first model based on the parameter adjustment value of the first model; and
   determining, based on the first compressed information and the first model, the second downlink channel information corresponding to the target antenna port.

3. The method according to claim 1 or 2, further comprising:

   determining an adjustment value of the first reference signal based on the first information; and
adjusting, based on the adjustment value of the first reference signal, the first reference signal sent by the access network device.

4. The method according to any one of claims 1 to 3, further comprising:
   sending indication information of the first antenna activation mode to the terminal device.

5. A communication method, comprising:

   receiving a first reference signal from an access network device;
   determining first compressed information based on the first reference signal and a first antenna activation mode, wherein the first compressed information represents first downlink channel information corresponding to an activated antenna port in the first antenna activation mode; and
   sending the first compressed information to the access network device.

6. The method according to claim 5, wherein the determining first compressed information based on the first reference signal and a first antenna activation mode comprises:

   determining a parameter adjustment value of a second model based on the first antenna activation mode;
   adjusting a parameter of the second model based on the parameter adjustment value of the second model; and
   determining the first compressed information based on the second model and the first reference signal.

7. The method according to claim 5 or 6, further comprising:
   receiving indication information of the first antenna activation mode from the access network device.

8. A communication apparatus, comprising a unit configured to implement the method according to any one of claims 1 to 4.

9. A communication apparatus, comprising a processor and a memory, wherein the processor is coupled to the memory, and the processor is configured to implement the method according to any one of claims 1 to 4.

10. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 4 by using a logic circuit or by executing code instructions.

11. A communication apparatus, comprising a unit configured to implement the method according to any one of claims 5 to 7.

12. A communication apparatus, comprising a processor and a memory, wherein the processor is coupled to the memory, and the processor is configured to implement the method according to any one of claims 5 to 7.

13. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 5 to 7 by using a logic circuit or by executing code instructions.

14. A computer-readable storage medium, wherein the computer-readable storage medium stores instructions, and when the instructions are run on a computer, the computer is enabled to perform the method according to any one of claims 1 to 4, or the method according to any one of claims 5 to 7.

15. A chip, comprising a processor, wherein the processor is coupled to a memory, and is configured to execute a computer program or instructions stored in the memory, and the chip is enabled to implement the method according to any one of claims 1 to 4, or implement the method according to any one of claims 5 to 7.

16. A computer program product, comprising a computer program or instructions, wherein when the computer program or the instructions are run by an apparatus, the method according to any one of claims 1 to 4 is performed, or the method according to any one of claims 5 to 7 is performed.

17. A communication system, comprising: a first communication apparatus, wherein the first communication apparatus is configured to implement the method according to any one of claims 1 to 4; and a second communication apparatus, wherein the second communication apparatus is configured to implement the method according to any one of claims 5 to 7.

FIG. 1

EP 4 529 035 A1

FIG. 2

FIG. 3

Model training node

Training data

Performance feedback

Model
deployment/
update

Model
feedback

Data source

Inference
data

Model inference
node

Output

Actor

FIG. 4

$w_0 x_0$

Neuron

$w_1 x_1$

$$y = f\left(\sum_{i=0}^{n} w_i x_i + b\right)$$

$y$

$w_n x_n$

FIG. 5

FIG. 6

Downlink
reference signal
or downlink
channel
estimation

Encoder

CSI feedback

Decoder 1

Initially
recovered
downlink
channel
information

Decoder 2

Finally
recovered
downlink
channel
information

Uplink channel estimation

FIG. 7

FIG. 8

FIG. 9

UE side | Base station side

| Second model | First model | Calculation of a first reference signal |

Third model

First antenna activation mode used when the first reference signal is sent

| Calculation of a second reference signal | Information obtained through processing on the second reference signal |

FIG. 10

UE side | Base station side

| Second model | First model | Calculation of a first reference signal |

Third model

Fourth model

First antenna activation mode used when the first reference signal is sent

| Calculation of a second reference signal | Information obtained through processing on the second reference signal |

FIG. 11

UE side | Base station side

| | | Calculation of a first reference signal |
| Second model | First model | |
| Fifth model | Third model | Fourth model |
| Calculation of a second reference signal | Information obtained through processing on the second reference signal | First antenna activation mode used when the first reference signal is sent |

**FIG. 12**

Communication apparatus 1300

Processing unit 1310

Transceiver unit 1320

**FIG. 13**

Communication apparatus 1400

Processor 1410    Interface circuit 1420

Memory 1430

**FIG. 14**

# EP 4 529 035 A1

**INTERNATIONAL SEARCH REPORT**

International application No.

**PCT/CN2023/096667**

| A. | CLASSIFICATION OF SUBJECT MATTER |
|---|---|

H04B 7/06(2006.01)i

According to International Patent Classification (IPC) or to both national classification and IPC

| B. | FIELDS SEARCHED |
|---|---|

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNTXT; CNKI; ENTXTC; VEN; ENTXT; 3GPP: 天线, 接入网, 终端, 模式, 端口, 激活, 参考信号, 信道信息, 压缩信息, CSI, antenna, port, activ+, UE, RS, MIMO, compression, mode

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021218455 A1 (SAMSUNG ELECTRONICS CO., LTD.) 15 July 2021 (2021-07-15) description, paragraphs [0029]-[0334] | 5, 7, 11-16 |
| A | CN 109728841 A (BEIJING UNIVERSITY OF POSTS AND TELECOMMUNICATIONS) 07 May 2019 (2019-05-07) entire document | 1-17 |
| A | US 2017195100 A1 (LG ELECTRONICS INC.) 06 July 2017 (2017-07-06) entire document | 1-17 |
| A | ZTE. "On UE Adaptation to Maximum Number of MIMO Layers" *3GPP TSG RAN WG1 #101 e-Meeting R1-2003488*, 16 May 2020 (2020-05-16), entire document | 1-17 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 September 2023** | **02 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/096667**

| Patent document cited in search report | | | Publication date (day/month/year) | Patent family member(s) | | | Publication date (day/month/year) |
|---|---|---|---|---|---|---|---|
| US | 2021218455 | A1 | 15 July 2021 | None | | | |
| CN | 109728841 | A | 07 May 2019 | None | | | |
| US | 2017195100 | A1 | 06 July 2017 | US | 10320546 | B2 | 11 June 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210626470